**Europäisches Patentamt**

**European Patent Office**

**Office européen des brevets**

(19)

(11) Veröffentlichungsnummer: **0 124 898**
**A2**

(12)

# EUROPÄISCHE PATENTANMELDUNG

(21) Anmeldenummer: **84105069.3**

(22) Anmeldetag: **04.05.84**

(51) Int. Cl.³: **G 01 P 5/00**

(30) Priorität: **06.05.83 DE 3316630**

(43) Veröffentlichungstag der Anmeldung:
**14.11.84 Patentblatt 84/46**

(84) Benannte Vertragsstaaten:
**AT BE CH DE FR GB LI NL**

(71) Anmelder: **Erwin Sick GmbH Optik-Elektronik**
**Sebastian-Kneipp-Strasse 1**
**D-7808 Waldkirch(DE)**

(72) Erfinder: **Lauer, Reinhard, Dipl.-Ing.**
**Unterfelderweg 5**
**D-7808 Waldkirch(DE)**

(72) Erfinder: **Hartmann, Werner**
**. Kübelestrasse 11**
**D-7830 Emmendingen 16(DE)**

(74) Vertreter: **Dipl.-Phys.Dr. Manitz Dipl.-Ing., Dipl.-Wirtsch.**
**Finsterwald Dipl.-Chem.Dr. Heyn Dipl.-Phys. Rotermund**
**Morgan, B.Sc.(Phys)**
**Robert-Koch-Strasse 1**
**D-8000 München 22(DE)**

(54) Vorrichtung zur Laufzeitbestimmung von Ultraschallimpulsen in einem Fluid.

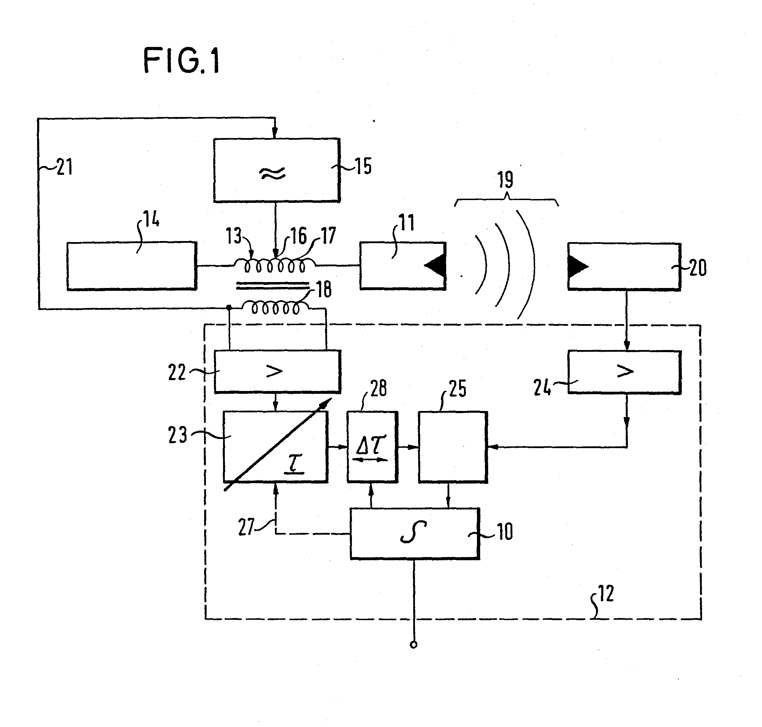

(57) Eine Vorrichtung zur Laufzeitbestimmung von Ultraschallimpulsen in einem Fluid weist zwei im Abstand voneinander angeordnete elektroakustische Wandler (11, 20) auf. Das dem Schalldruck proportionale Sendesignal ist über ein regelbares Verzögerungsglied (23) an eine Multiplikationsschaltung (25) angelegt, der auch das Empfangssignal zugeführt ist. Das Produktsignal seinerseits ist einer Laufzeitdetektorschaltung (10) zugeführt (Figur 1).

FIG.1

EP 0 124 898 A2

0124898

Die Erfindung betrifft eine Vorrichtung zur Laufzeitbestimmung von Ultraschallimpulsen in einem Fluid, insbesondere
Gas, mit wenigstens zwei im Abstand voneinander angeordneten elektroakustischen Wandlern, von denen jeweils einer
Ultraschallimpulse über die das Fluid enthaltende Meßstrecke
schickt, während der andere die durch die Meßstrecke gelaufenen Impulse empfängt, wobei beide Wandler an eine Korrelationsschaltung angeschlossen sind, um die Laufzeit der Impulse zu
ermitteln. Eine derartige Vorrichtung wird bei einem Verfahren zur Messung der Strömungsgeschwindigkeit eines gasförmigen Mediums angewendet. Hierzu werden Ultraschallimpulse in
eine das gasförmige Medium enthaltende Meßstrecke in einer
solchen Richtung geschickt, daß sie zumindest eine Komponente mit der Strömungsrichtung des Mediums gemeinsam hat.
Durch Messung der Impulslaufzeit für in entgegengesetzten
Richtungen durch die Meßstrecke geleitete Ultraschallimpulse
kann aus den Laufzeitdifferenzen die Strömungsgeschwindigkeit
des Mediums ermittelt werden.

Wichtig für eine einwandfreie Korrelationsmessung ist es,
daß die Schalldrucksignale des Senders und Empfängers durch
vorzugsweise piezoelektrische Verbundschwinger in entsprechende elektrische Signale umgewandelt werden. Beim Empfangswandler ergibt sich am Ausgang ein derartiges Signal automatisch. Beim Sendewandler muß es durch spezielle Maßnahmen
erzeugt werden, wie sie z.B. in der gleichzeitig eingereichten Patentanmeldung mit dem Titel "Vorrichtung zur Laufzeitbestimmung von Ultraschallimpulsen in einem Fluid" (unser
Aktenzeichen S 3898) beschrieben sind. Die Erzeugung eines
derartigen Sendesignals am Eingang der Korrelationsschaltung wird auch bei der vorliegenden Erfindung vorausgesetzt.

0124898

Die Laufzeit $\tau_0$ des Ultraschallsignals wird aus dem Maximum der Kreuzkorrelationsfunktion ermittelt:

$$k_{xy}(\tau) = \int\limits_{-\infty}^{+\infty} x(t-\tau)\, y(t)\, dt \qquad (1)$$

Die Kreuzkorrelationsfunktion ist also das zeitlich gemittelte Produkt aus dem Empfangssignal y(t) und dem um eine Verzögerungszeit $\tau$ verschobenen Sendesignal x(t).

Statt einer aufwendigen Maximumsuche ist es schaltungstechnisch günstiger, die Nullstelle von $dk_{xy}/d\tau$ zu suchen.

Bekannt sind gerätetechnische Vereinfachungen, die darauf beruhen, daß im Maximum der Kreuzkorrelationsfunktion mit der Verzögerungszeit $\tau_0$ gilt:

$$\int\limits_{-\infty}^{+\infty} x(t-\tau_0)\, \dot{y}(t)\, dt = 0 \qquad (2)$$

$\dot{y}(t)$ ist dabei die zeitliche Ableitung des Signals y(t).

Eine weitere gerätetechnische Vereinfachung ist bei Benutzung der sogenannten Polaritätskorrelation möglich:

$$k_{sgnx\, sgny}(\tau) = \int\limits_{-\infty}^{+\infty} sgn\left[x(t-\tau)\right] \cdot sgn\left[\dot{y}(t)\right] dt \qquad (3)$$

Der Vorteil der Polaritätskorrelation gegenüber der Analogmultiplikation gemäß Gleichung (2) besteht darin, daß die analoge, driftbehaftete Multiplikation entfällt und daß die Signale digital verarbeitet werden können. Bei beiden Verfahren muß jedoch das Signal y(t) zeitlich differenziert werden.

Zur Differentation dient ein Filter mit dem (normierten)
Frequenzgang

$$f(j\omega) = \frac{j\dfrac{\omega}{\omega_g}}{1 + j\dfrac{\omega}{\omega_g}} \qquad . \qquad (4)$$

Der Term im Nenner ist unerwünscht, jedoch nicht vermeidbar. Es muß deshalb eine Kompensation erfolgen.
Ein anderer Nachteil des Differenzierens besteht darin,
daß insbesondere bei steilen Signalflanken (z.B. Rechtecken) eine Signalverarbeitung ohne Nichtlinearitätsfehler immer schwieriger wird.

Das Ziel der vorliegenden Erfindung besteht darin, eine
Vorrichtung der eingangs genannten Gattung zu schaffen,
bei der man ohne die zeitliche Differentiation auskommt.

Zur Lösung dieser Aufgabe sieht die Erfindung vor, daß
das dem Schalldruck proportionale Sendesignal über ein
regelbares Verzögerungsglied an eine Multiplikationsschaltung angelegt ist, der auch das Empfangssignal zugeführt ist, und daß das Produktsignal einer Laufzeitdetektorschaltung zugeführt ist.

Vorteilhafte Ausgestaltungen der Erfindung sind durch die
Unteransprüche gekennzeichnet.

Der Grundgedanke der Erfindung ist darin zu sehen, daß das
Maximum der Kreuzkorrelationsfunktion vorliegt, wenn die
Verzögerung des Sendersignals der Laufzeit des Ultraschallimpulses entspricht. Das Besondere der erfindungsgemäßen
Vorrichtung besteht nun darin, daß die Kreuzkorrelationsfunktion erst garnicht gebildet werden muß.

Die Integrationszeit hängt ab von der Meßrate, der Trägerfrequenz der Impulse, der Standardabweichung der Laufzeit
und von der geforderten Meßwertgenauigkeit. Als Faustformel kann man angeben, daß die Integrationszeit größer oder gleich dem 50-fachen der Zeitdauer eines Meßzyklus ist. Bezüglich der Wahl der Modulationsfrequenz ist darauf zu achten, daß möglichst viele Perioden der Modulationsfrequenz in der Länge eines Ultraschallimpulses enthalten sind.

Durch den erfindungsgemäßen Vorzeichen-Umschalter wird bewirkt, daß aus dem Wechselsignal nach dem Bandfilter eine Gleichkomponente gewonnen wird, die je nach Abweichung der Verzögerungszeit von der Laufzeit der Ultraschallsignale positiv oder negativ sein kann. Die Gleichkomponente verschwindet, wenn die Verzögerungszeit und die Ultraschall-Laufzeit gleich groß sind.

Die erfindungsgemäße Vorrichtung gestattet eine sehr genaue Bestimmung der Laufzeit. Trotz vielfältiger Störquellen liegt die Genauigkeit bei der Erfassung der Einzellaufzeiten im Promillebereich.

Erfindungsgemäß wird also das um eine Zeit $\tau$ zu verzögernde Sendesignal mit einer Laufzeitänderung $\pm\Delta\tau$ moduliert und mit dem Empfangssignal multipliziert. Der Laufzeitmodulator kann erfindungsgemäß durch ein Verzögerungsglied (Allpaß) mit der Modulationsfrequenz fm gebildet sein. Hierauf wirkt der Rechteckwellengenerator ein.

Aus dem Produkt des verzögerten und in der Laufzeit modulierten Sendesignals und dem Empfangssignal wird mittels des Bandfilters der Mittenfrequenz fm der modulierte Anteil herausgefiltert. Das durch die Laufzeitmodulation entstandene Wechselsignal wird nach dem Bandfilter mittels des Vorzeichenumschalters im Takt der Modulationsfrequenz fm gleichgerichtet. Das gleichgerichtete Wechselsignal wird integriert und für die automatische Nullpunktsuche herangezogen.

**0124898**

Wichtig ist, daß bei der erfindungsgemäß durchgeführten Kreuzkorrelation auf ein Differenzieren verzichtet wird, was unter anderem den Nachteil hätte, daß insbesondere bei steilen Signalflanken (z.B. Rechtecken) eine Signalverarbeitung ohne Nichtlinearitätsfehler relativ schwierig ist.

Die Erfindung wird im folgenden beispielsweise anhand der Zeichnung beschrieben; in dieser zeigt:

Fig. 1     ein vereinfachtes Blockschaltbild einer erfindungsgemäßen Vorrichtung zur Laufzeitbestimmung von Ultraschallimpulsen mit einer für die Erzeugung des Sendesignals in der Korrelationsschaltung wichtigen Gabelschaltung,

Fig. 2     ein Blockschaltbild einer bevorzugten Korrelationsschaltung der erfindungsgemäßen Vorrichtung und

Fig. 3     drei den gleichen Zeitmaßstab aufweisende Signaldiagramme zum Schaltbild nach Fig. 2, wobei das oberste Diagramm das verzögerte Sendesignal wiedergibt, das zweite Diagramm die Laufzeitmodulation und das dritte Diagramm das bezüglich der Laufzeit modulierte Sendesignal vor der Multiplikation.

Nach Fig. 1 ist ein elektro-akustischer Ultraschall-Sendewandler 11 am einen Ende einer Meßstrecke 19 angeordnet, die durch ein Gas hindurchführt, in dem die Laufzeit von Ultraschallimpulsen zu messen ist. Dem Sendewandler im Abstand gegenüber liegt ein elektro-akustischer Empfangswandler 20. Beide Wandler sind als piezoelektrische Verbundschwinger ausgebildet.

Der Sendewandler 11 wird über das eine Ende der Primärwicklung 17 eines induktiven Übertragers gespeist, dessen anderes Ende an eine Leitungsnachbildungsschaltung 14 angeschlossen ist. Die Primärwicklung 17 weist außerdem einen Mittelabgriff 16 auf, an den der Ausgang eines Impuls-Frequenzsignale abgebenden Signalgenerators 15 angelegt ist. In Abhängigkeit vom Ort des Mittelabgriffs 16 ist die Leitungsnachbildungsschaltung 14 so ausgebildet, daß in der ihr zugeordneten Hälfte der Primärwicklung 17 des Übertragers 13 eine magnetische Erregung erzeugt wird, die der von dem Generatorsignal in der anderen Wicklungshälfte hervorgerufenen magnetischen Erregung entgegengesetzt ist, so daß insoweit in der Sekundärwicklung 18 des Übertragers 13 kein Signal erzeugt wird.

Die Sekundärwicklung 18 ist ebenso wie der Empfänger 20 an eine Korrelationsschaltung 12 angelegt, die weiter unten im einzelnen beschrieben wird. Das Ausgangssignal des Übertragers 13 ist außerdem über eine Rückkopplungsleitung 21 an den Signalgenerator 15 zurückgeführt. Es wird so eine selbsterregte Oszillatorschaltung erzielt, die auf die Frequenz des Sendewandlers 11 automatisch abgestimmt ist. Die Schaltung für die Erzeugung einzelner Ultraschallimpulse ist im Signalgenerator 15 integriert und nicht im einzelnen dargestellt.

Aufgrund der erfindungsgemäßen Gabelschaltung 11, 13, 14 entsteht in der Sekundärwicklung 18 lediglich ein durch die Membranauslenkung des Sendewandlers 11 bedingtes elektrisches Signal, welches dem vom Sendewandler 11 erzeugten Schalldruck proportional ist. Da auch vom Empfangswandler 20 ein dem Schalldruck proportionales Signal an die Korrelationsschaltung 12 abgegeben wird, vergleicht diese in der erforderlichen Weise tatsächlich zwei vollständig miteinander korrelierte Signale, was einer genauen Laufzeitbestimmung zugute kommt.

Der Einfachheit halber ist die Schließung der einzelnen
Stromkreise insbesondere im Bereich der Gabelschaltung
11, 13, 14 über Masse nicht im einzelnen dargestellt.

Die Sekundärwicklung 18 des Übertragers 13 ist über einen
Verstärker 22 an ein regelbares Verzögerungsglied 23 angelegt, durch welches dem vom Sendewandler 11 kommenden, dem
Schalldrucksignal proportionalen Signal eine veränderliche
Verzögerung $\tau$ vermittelt werden kann.

Der Ausgang des Verzögerungsgliedes 23 ist über einen Laufzeitmodulator 28 an den einen Eingang einer Multiplikationsschaltung 25 angelegt, derem anderen Eingang über einen Verstärker 24 das Ausgangssignal vom Empfangswandler 20 zugeführt ist. Der Ausgang der Multiplikationsschaltung 25 liegt
an einer Laufzeitdetektorschaltung 10 an, welche es gestattet, das Maximum des in der Multiplikationsschaltung 25 gebildeten Produkts im zeitlichen Mittel zu erfassen. Das Ausgangssignal der Laufzeitdetektorschaltung 10 entspricht der
Ableitung der Kreuzkorrelationsfunktion nach der Verschiebungszeit $\tau$ und kann z.B. als Gleichspannung abgenommen werden, deren Größe und Vorzeichen von der Differenz der Verzögerungszeit $\tau$ zur Signallaufzeit abhängt. Der Gleichspannungsausgang
der Laufzeitdetektorschaltung 10 dient dazu, die Verzögerungszeit $\tau$ im Verzögerungsglied 23 auf einen Wert $\tau_0$ einzuregeln,
der der Signallaufzeit entspricht.

Da dem Verstärker 22 ein Signal zugeführt wird, das dem vom
Sendewandler 11 erzeugten Ultraschalldruck proportional ist,
werden in der erfindungsgemäßen Korrelationsschaltung 12
auch sämtliche beispielsweise durch mechanische Unzulänglichkeiten des piezoelektrischen Verbundschwingers bedingte
Verformungen des Schalldrucksignals berücksichtigt, so daß
diese die Genauigkeit der Messung der Signallaufzeit $\tau_0$
nicht beeinträchtigen können.

Die erfindungsgemäße Vorrichtung kann auch überall dort angewendet werden, wo es auf eine genaue Bestimmung der Laufzeiten von Ultraschallimpulsen in einem Fluid ankommt. Die Anwendung soll also nicht auf Vorrichtungen zur Messung der Strömungsgeschwindigkeit eines Fluids beschränkt sein, in deren Rahmen auch eine Laufzeitmessung zu erfolgen hat.

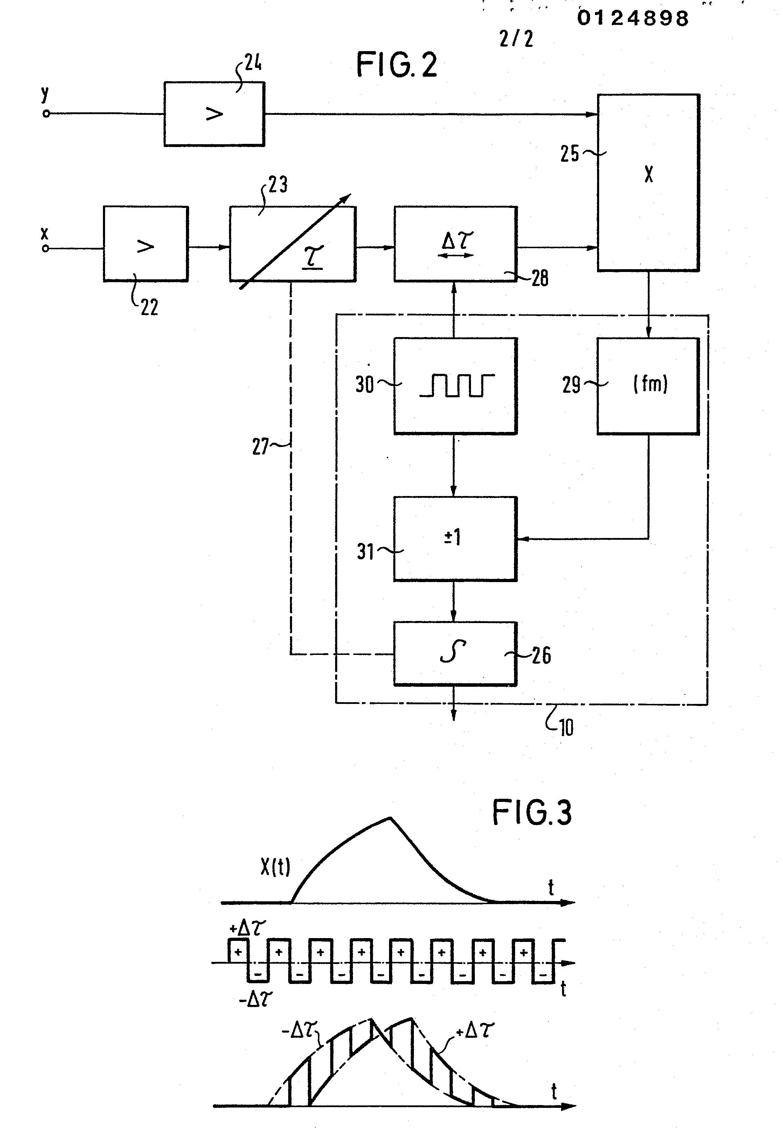

Der Aufbau der Laufzeitdetektorschaltung 10 ergibt sich im einzelnen aus Fig. 2. Danach befindet sich in der Laufzeitdetektorschaltung 10 eine Integrationsschaltung 26, deren Integrationszeit abhängt von der Meßrate, der Trägerfrequenz der Impulse, der Standardabweichung der Laufzeit und von der geforderten Meßwertgenauigkeit. Als Faustregel kann man davon ausgehen, daß die Integrationszeit größer oder gleich dem 50-fachen der Zeitdauer eines Meßzyklus ist.

Von dem Ausgang der Laufzeitdetektorschaltung 10 kann eine Steuerleitung 27 zum Verzögerungsglied 23 zurückgeführt sein, um dieses automatisch so einzuregeln, daß der Ausgang der Laufzeitdetektorschaltung 10 einen Nulldurchgang aufweist. Die so automatisch eingeregelte Verzögerungszeit $\tau_0$ entspricht dann der Signallaufzeit auf der Meßstrecke 19.

Fig. 2 zeigt eine bevorzugte Ausführungsform der Korrela-tionsschaltung 12 nach Fig. 1. Gleiche Bezugszahlen bezeichnen entsprechende Teile wie in Fig. 1.

Das Empfangssignal y wird wieder über den Verstärker 24 an den einen Eingang der Multiplizierschaltung 25 angelegt. Das Sendesignal x, welches aufgrund der Gabelschaltung 11, 13, 14 nach Fig. 1 dem Schalldruck proportional ist, ist über den Verstärker 22 wieder an das regelbare Verzögerungsglied 23 angeschlossen. Zwischen das Verzögerungsglied 23 und die Multiplizierschaltung 25 ist wieder der Laufzeitmodulator 28 eingeschaltet, mittels dessen das Impuls-Sendesignal x bei einer Impulslänge von etwa 1 ms

- 9 -

beispielsweise mit einer Frequenz 10 kHz laufzeitmoduliert wird. Die Modulationsfrequenz wird von einem Rechteckgenerator 30 einer Frequenz von 10 kHz geliefert. Die modulierte Laufzeit weist eine Amplitude $\Delta\tau$ auf, die gleich der halben Periodendauer der Modulationsfrequenz ist.

Fig. 3 zeigt oben das um die Verzögerungszeit $\tau$ verzögerte Ultraschallimpuls-Sendesignal x, darunter das vom Rechteckgenerator 30 stammende Rechteck-Modulationssignal und ganz unten das am Ausgang des Laufzeitmodulators 28 erscheinende modulierte Signal.

An den Ausgang der Multiplizierschaltung 25 ist ein Bandfilter 29 angeschlossen, das auf die Frequenz des Rechteckgenerators 30 von z.B. 10 kHz abgestimmt ist. Das Bandfilter 29 filtert also die Mittenfrequenz fm von 10 kHz aus dem Eingangssignal heraus.

Weiter ist zwischen das Bandfilter 29 und die Integrationsschaltung 26 ein Vorzeichenumschalter 31 geschaltet, welcher an den Eingang der Integrationsschaltung 26 angelegt ist. Es entsteht so am Ausgang der Integrationsschaltung 26 ein Ausgangssignal, welches dann gleich Null wird, wenn die Verzögerungszeit $\tau$ im Verzögerungsglied 23 der Signallaufzeit $\tau_0$ entspricht. Ist dieser Abgleich nicht erfolgt, so ist das Ausgangssignal der Integrationsschaltung 26 entweder eine positive oder eine negative Gleichspannung.

Durch Rückführung über die Steuerleitung 27 kann so auf einfache Weise die Differenz von der Verzögerungszeit im regelbaren Verzögerungsglied 23 zur Signallaufzeit auf Null gebracht werden.

Das Verzögerungsglied 23 ist vorzugsweise durch eine Eimerkettenschaltung gebildet.

Patentansprüche
_____

1. Vorrichtung zur Laufzeitbestimmung von Ultraschallimpulsen in einem Fluid, insbesondere Gas, mit wenigstens
   zwei im Abstand voneinander angeordneten elektroakustischen Wandlern, von denen jeweils einer Ultraschallimpulse über die das Fluid enthaltende Meßstrecke schickt,
   während der andere die durch die Meßstrecke gelaufenen
   Impulse empfängt, wobei beide Wandler an eine Korrelationsschaltung angeschlossen sind, um die Laufzeit der Impulse
   zu ermitteln, dadurch  g e k e n n z e i c h n e t ,
   daß das dem Schalldruck proportionale Sendesignal (x)
   über ein regelbares Verzögerungsglied (23) an eine  Multiplikationsschaltung (25) angelegt ist, der auch das
   Empfangssignal (y) zugeführt ist, und daß das Produktsignal
   einer Laufzeitdetektorschaltung (10) zugeführt ist.

2. Vorrichtung nach Anspruch 1, dadurch g e k e n n z e i c h - n e t , daß vom Ausgang der Laufzeitdetektorschaltung (10) eine Steuerleitung (27) zum Verzögerungsglied (23) zurückgeführt ist, über welche das Verzögerungsglied (23) selbsttätig auf den der Signallaufzeit ($\tau_0$) entsprechenden Wert eingeregelt wird.

3. Vorrichtung nach Anspruch 1 oder 2, dadurch g e k e n n - z e i c h n e t , daß zwischen das Verzögerungsglied (23) und die Multiplikationsschaltung (25) ein Laufzeitmodulator (28) geschaltet ist.

4. Vorrichtung nach einem der vorhergehenden Ansprüche, dadurch g e k e n n z e i c h n e t , daß die Laufzeitdetektorschal- tung (10)  ein an die Multiplikationsschaltung (25) angeschlossenes, auf die Modulationsfrequenz (fm) abgestimmtes Bandfilter (29) aufweist.

5. Vorrichtung nach Anspruch 3 oder 4, dadurch g e k e n n - z e i c h n e t , daß an den Laufzeitmodulator (28) ein die Modulationsfrequenz erzeugender Rechteckgenerator (30) angeschlossen ist, welcher die Laufzeit rechteckförmig verändert.

6. Vorrichtung nach Anspruch 4 oder 5, dadurch g e k e n n - z e i c h n e t , daß das Bandfilter (29) über einen Vorzeichenumschalter (31) an eine Integrationsschaltung (26) angeschlossen ist, welcher von dem Rechteckgenerator (30) im Takt der Modulationsfrequenz (fm) periodisch umgeschal- tet wird.

FIG.1

FIG.2

FIG.3